# EUROPÄISCHE PATENTSCHRIFT

(11) **EP 2 289 855 B1**
(45) Veröffentlichungstag und Bekanntmachung des Hinweises auf die Patenterteilung: **15.10.2014**
(21) Anmeldenummer: 09011138.6
(22) Anmeldetag: 31.08.2009
(51) Int. Cl.: C02F 3/12, C02F 3/30

(54) **Abwasserreinigungsanlage sowie Verfahren zur Abwasserreinigung**
Waste water purification assembly and method for waste water purification
Installation de nettoyage d'eaux usées et procédé de nettoyage d'eaux usées

(43) Veröffentlichungstag der Anmeldung: 02.03.2011
(73) Patentinhaber: Hartwig, Peter, 30900 Wedemark (DE)
(72) Erfinder: Hartwig, Peter, 30900 Wedemark (DE)
(74) Vertreter: Günther, Constantin

(56) Entgegenhaltungen:
- WO-A1-99/44951
- DE-C1- 19 640 762
- US-A- 5 228 996
- US-A1- 2009 145 844
- US-B1- 6 379 545

## Beschreibung

Die Erfindung betrifft eine Abwasserreinigungsanlage gemäß dem Anspruch 1. Die Erfindung betrifft außerdem ein Verfahren zur Abwasserreinigung gemäß dem Anspruch 10. Die Erfindung betrifft insbesondere die biologische Abwasserreinigung nach dem Belebschlammverfahren.

Im Bereich der biologischen Abwasserreinigung nach dem Belebschlammverfahren gibt es zwei prinzipielle Arten des Aufbaus einer hierfür zu verwendenden Abwasserreinigungsanlage. Bei einer ersten Art des Aufbaus ist ein Reaktionsbecken und ein davon räumlich getrenntes Sedimentationsbecken vorgesehen. Das Reaktionsbecken hat die Funktion eines biologischen Reaktors, d.h. das Abwasser wird durch die im belebten Schlamm enthaltenen Bakterien behandelt. Nach einer gewissen Behandlungszeit wird das Abwasser-Belebtschlamm-Gemisch aus dem Reaktionsbecken in das Sedimentationsbecken überführt. Im Sedimentationsbecken findet durch das Einstellen einer nur sehr geringen Strömungsgeschwindigkeit eine Sedimentation statt. Hierbei setzt sich der belebte Schlamm am Boden des Sedimentationsbeckens ab; während sich im oberen Beckenbereich eine Klarwasserschicht ausbildet, aus der das Klarwasser abgezogen wird. Der belebte Schlamm wird in das Reaktionsbecken zurückgeführt und überschüssiger Schlamm abgezogen. Der Betrieb einer solchen Anlage erfolgt kontinuierlich.

Ein zweites Prinzip einer Abwasserreinigungsanlage ist ein so genannter Sequencing-Batch-Reaktor, auch als SBR-Reaktor bezeichnet. Hierbei sind das Reaktionsbecken und das Sedimentationsbecken zu einem kombinierten Reaktions- und Sedimentationsbecken zusammengefasst. Die Beschickung des SBR-Reaktors mit Abwasser erfolgt zyklisch. Die eingangs beschriebene räumliche Trennung zwischen der Reaktionsbehandlung des Abwassers und der Sedimentation wird beim SBR-Reaktor durch eine zeitliche Trennung ersetzt. Es wird zunächst in dem Becken eine Reaktionsbehandlung durchgeführt, danach erfolgt eine Sedimentationsphase und eine Klarwasser- und Überschußschlammabzugsphase.

Ein SBR-Reaktor ist beispielsweise aus der DE 20 2004 010 466 U1 bekannt.

US2009145844 beschreibt einen SBR-Reaktor mit einem Einlaufmischbecken und einem kombinierten Reaktionsbecken und Trennungsbecken.

Der Vorteil des kontinuierlichen Verfahrens liegt in der einfachen Betriebsweise und im geringeren erforderlichen Bauvolumen; das kontinuierliche Verfahren erfordert aber einen höheren Aufwand für die maschinentechnische Installation als das SBR-Verfahren. Das SBR-Verfahren ist durch die mögliche Anpassung der Zykluszeiten flexibler bezüglich der Anpassung an unterschiedliche Belastungs- und Betriebssituationen als das kontinuierliche Verfahren, benötigt aber in der Regel zusätzliches Volumen für die Speicherung des Abwassers während der Betriebszeiten ohne Beschickung und zur Abdeckung der Betriebszeiten mit Klarwasser- und Schlammabzug, in denen der SBR-Reaktor nicht für eine biologische Reinigung oder eine Sedimentation genutzt werden kann. Darüber hinaus kann bei Einleitung in empfindliche Gewässer eine Vergleichmäßigung der zyklisch abgezogenen Abflüsse erforderlich werden, was wiederum ein zusätzliches Speichervolumen erfordert.

Der vorliegenden Erfindung liegt demgegenüber die Aufgabe zugrunde, Möglichkeiten zur Abwasserreinigung aufzuzeigen, mit denen Abwasser in Platz sparender Bauweise besonders effizient, mit nur wenigen maschinellen Installationen auf sehr wirtschaftliche Weise energiesparend gereinigt werden kann.

Diese Aufgabe wird durch eine Abwasserreinigungsanlage gemäß Anspruch 1 sowie ein Verfahren zur Abwasserreinigung gemäß Anspruch 11 gelöst. Die Unteransprüche enthalten vorteilhafte Ausgestaltungen der Erfindung.

Die vorliegende Erfindung zeigt vorteilhaft eine Möglichkeit auf, eine verhältnismäßig klein bauende und damit relativ kostengünstig zu erstellende Abwasserreinigungsanlage mit vergleichsweise geringem Aufwand für die maschinentechnische Installationen aufzubauen. Die Erfindung ermöglicht einen Betrieb der Abwasserreinigungsanlage in einer Art halbkontinuierlichem zyklischen Verfahren, im Vergleich zum kontinuierlichen Verfahren wie der eingangs beschriebenen Methode, die getrennte Becken für die Reaktion und die Sedimentation erfordert. Die vorliegende Erfindung kombiniert daher die Vorteile der rein kontinuierlichen Abwasserreinigung, nämlich insbesondere den Vorteil der durchgängig effektiv genutzten Volumen und des möglichen Verzichts auf Vor- und/ oder Nachspeicher, mit dem Vorteil der Flexibilität durch die Wahl der Zykluszeiten für den Fließrichtungswechsel und der möglichen maschinentechnisch einfachen Ausstattung von SBR-Reaktoren.

Hierzu weist die erfindungsgemäße Abwasserreinigungsanlage ein kombiniertes Reaktions- und Sedimentationsbecken mit einem ersten und einem zweiten Beckenabschnitt auf. Gegenüber dem Reaktions- und Sedimentationsbecken eines konventionellen SBR-Reaktors ist erfindungsgemäß als Besonderheit vorgesehen, dass eine erste Verbindungsstelle zwischen einem Einlaufmischbecken und dem ersten Beckenabschnitt und eine zweite Verbindungsstelle zwischen dem Einlaufmischbecken und dem zweiten Beckenabschnitt vorgesehen ist. Die Verbindungsstellen befinden sich im unteren Beckenbereich des jeweiligen Beckenabschnitts, z.B. in Bodennähe des jeweiligen Beckenabschnitts. An jeder Verbindungsstelle ist jeweils eine Fördereinrichtung vorgesehen, die zur Förderung von Rücklaufschlamm von dem jeweiligen Beckenabschnitt in das Einlaufmischbecken betätigbar ist. Als Rücklaufschlamm wird ein Anteil des Belebschlammes bezeichnet, der aus einem Becken der Abwasserreinigungsanlage in das Einlaufmischbecken zurückgeführt wird. Zudem ist eine erste Klarwasserabzugsstelle im oberen Beckenbereich des ersten Beckenabschnitts und eine zweite Klarwasserabzugsstelle im oberen Beckenbereich des zweiten Beckenabschnitts angeordnet.

Als Fördereinrichtung kann jede Art von Einrichtung verwendet werden, die zur Förderung von Abwasser und Schlamm geeignet ist, z.B. eine handelsübliche Pumpe. Geeignet ist z.B. eine Propellerpumpe.

Eine solche Anordnung erlaubt einen phasenweisen Betrieb der Abwasserreinigungsanlage in unterschiedlichen Fließrichtungen. So kann in einer ersten Betriebsphase der Abwasserreinigungsanlage der erste Beckenabschnitt als Reaktionsabschnitt und der zweite Beckenabschnitt als Sedimentationsabschnitt verwendet werden. In einer zweiten Betriebsphase wird dagegen der erste Beckenabschnitt als Sedimentationsabschnitt und der zweite Beckenabschnitt als Reaktionsabschnitt verwendet. Durch Umwälzung oder Belüftung wird der sedimentierte Schlamm nach der Sedimentationsphase zu Beginn einer neuen Reaktionsphase wieder mit dem Beckeninhalt vermischt. Hierdurch ist das gesamte Volumen für die biologische Aktivität verfügbar. Da für die Rückführung von Rücklaufschlamm an jeder der zwei Verbindungsstellen eine Fördereinrichtung vorgesehen ist, kann somit je nach Betriebsrichtung der Abwasserreinigungsanlage im einen Fall die erste Fördereinrichtung den Rücklaufschlamm von dem als Sedimentationsabschnitt betriebenen Beckenabschnitt in das Einlaufmischbecken zurückfördern und in der anderen Betriebsphase die zweite Fördereinrichtung. Zudem ist sowohl im ersten Beckenabschnitt als auch im zweiten Beckenabschnitt eine jeweils zugeordnete Klarwasserabzugsstelle im oberen Beckenbereich vorgesehen. Dies erlaubt einen Klarwasserabzug jeweils aus demjenigen Beckenabschnitt, der je nach Betriebsphase der Abwasserreinigungsanlage gerade der Sedimentationsabschnitt ist.

Durch die Anordnung der jeweiligen Verbindungsstelle, die für den Rücklaufschlammabzug dient, im unteren Beckenbereich, d.h. in der Nähe des Bodens, und der jeweiligen Klarwasserabzugsstelle im oberen Beckenbereich desselben Beckenabschnitts entsteht eine gleichgerichtete Strömung von Klarwasser und Rücklaufschlamm, was Verwirbelungen reduziert und eine besonders gute Sedimentationsleistung bewirkt.

Gemäß einer vorteilhaften Weiterbildung der Erfindung ist eine erste Beschickungsstelle zur Zufuhr von zu reinigendem Abwasser von dem Einlaufmischbecken in das kombinierte Reaktions- und Sedimentationsbecken zwischen dem Einlaufmischbecken und dem ersten Beckenabschnitt im unteren Beckenbereich des ersten Beckenabschnitts angeordnet. Eine zweite Beschickungsstelle zur Zufuhr von zu reinigendem Abwasser von dem Einlaufmischbecken in das kombinierte Reaktions- und Sedimentationsbecken ist zwischen dem Einlaufmischbecken und dem zweiten Beckenabschnitt im unteren Beckenbereich des zweiten Beckenabschnitts angeordnet. Über die jeweilige Beschickungsstelle kann Abwasser von dem Einlaufmischbecken in denjenigen Beckenabschnitt des kombinierten Reaktions- und Sedimentationsbeckens zugeführt werden, der gerade als Reaktionsabschnitt betrieben wird.

Sofern in der vorliegenden Patentanmeldung von der Zufuhr von Abwasser von dem Einlaufmischbecken in das kombinierte Reaktions- und Sedimentationsbecken die Rede ist, schließt dies auch die Zufuhr von belebtem Schlamm ein, zumal in dem Einlaufmischbecken eine Mischung aus Abwasser und belebtem Schlamm erzeugt wird.

Gemäß einer vorteilhaften Weiterbildung der Erfindung ist die erste Verbindungsstelle zugleich die erste Beschickungsstelle und/oder die zweite Verbindungsstelle zugleich die zweite Beschickungsstelle. Die jeweilige Verbindungsstelle kann so vorteilhaft eine Doppelfunktion aufweisen, so dass keine separate Verbindung zwischen dem Einlaufmischbecken un dem kombinierten Reaktions- und Sedimentationsbecken für die Zufuhr des Abwasser vorgesehen werden muss. Vorteilhaft fungiert die jeweilige Verbindungsstelle je nach Betriebsphase des ihr zugeordneten Beckenabschnitts des Reaktions- und Sedimentationsbeckens als Beschickungsstelle oder als Rücklaufschlammabzug. Dies erlaubt eine einfachere und kostengünstigere Realisierung der Abwasserreinungsanlage. Zudem kann die zur Förderung von Rücklaufschlamm vorgesehene jeweilige Fördereinrichtung zugleich zur Unterstützung der Beschickung des Reaktions- und Sedimentationsbeckens mit Abwasser mitverwendet werden, ohne dass eine zusätzliche Fördereinrichtung bei Bedarf erforderlich wäre.

Die erste bzw. die zweite Verbindungsstelle bzw. die erste bzw. die zweite Beschickungsstelle kann in einer einfachen Ausführung als Öffnung. z.B. als Loch, in einer Trennwand zwischen dem Einlaufmischbecken und dem jeweiligen Beckenabschnitt des Reaktions- und Sedimentationsbeckens ausgebildet sein.

Der Wechsel eines Beckenabschnitts zwischen Reaktions- und Sedimentationsbetrieb kann auch zeitlich überlappend sein, indem z.B. bereits am Boden Abwasser aus dem Einlaufmischbecken zugeleitet wird, während an der Klarwasserabzugsstelle desselben Beckenabschnitts noch für eine bestimmte Zeit Klarwasser entnommen wird.

Die Erfindung hat insbesondere den Vorteil, dass der Flüssigkeitspegel in dem kombinierten Reaktions- und Sedimentationsbecken nahezu konstant gehalten werden kann, d.h. es treten nicht die für SBR-Reaktoren typischen zyklischen Pegeländerungen auf. Hierdurch kann Klarwasser nahezu kontinuierlich in gleicher Qualität an der Oberfläche des Sedimentationsabschnitts des kombinierten Reaktions- und Sedimentationsbecken abgezogen werden. Zudem entfällt die Notwendigkeit von leistungsfähigen Pumpen bzw. Dekantern zum zyklischen Abpumpen des Klarwassers mit gegenüber dem Zulauf stark erhöhter Kapazität.

Das Einlaufmischbecken und das Reaktionsbecken können belüftet oder unbelüftet, aerob, anoxisch oder anaerob betrieben werden.

Unter einem anaeroben Betrieb ist ein Betrieb unter Ausschluss von Sauerstoff zu verstehen. Liegt hingegen zumindest ungelöster gebundener Sauerstoff vor, handelt es sich um eine anoxische Betriebsweise. Liegt gelöster Sauerstoff vor, handelt es sich um eine aerobe Betriebsweise.

Gemäß einer vorteilhaften Weiterbildung der Erfindung ist in dem Einlaufmischbecken, dem kombinierten Reaktions- und Sedimentationsbecken und/oder einem Schlammnachbehandlungsbecken, z.B. mit biologischer Aktivität, zumindest eine Belüftungseinrichtung und/oder eine Durchmischeinrichtung vorgesehen. Die Belüftungseinrichtung dient zur Zufuhr von Luft zu dem Beckeninhalt, um günstige Reaktionsbedingungen zu bewirken. Die Belüftungseinrichtung weist beispielsweise ein oder mehrere Belüftungsrohre auf, die im Bereich des Bodens eines Beckens geführt sind und in diesem Bereich Luftauslassöffnungen aufweisen oder zusätzlich mit Luftverteilungseinrichtungen wie zum Beispiel feinporigen Belüftungselementen ausgestattet sind.

Die Durchmischeinrichtung dient zum Durchmischen eines Beckeninhalts, wobei die Durchmischung üblicherweise in einer Reaktionsphase durchgeführt wird und zur Umwälzung des Beckeninhalts dient. Die Durchmischeinrichtung kann beispielsweise als eine im unteren Beckenbereich installierte Umwälzeinrichtung ausgebildet sein, die rotatorische Bewegungen nach Art eines Propellers ausführt.

Gemäß einer vorteilhaften Weiterbildung der Erfindung ist im Bereich der Klarwasserabzugsstelle zur Minimierung des Flockenabtriebs eine zusätzliche Installation vorgesehen, die den Gehalt an abfiltrierbaren Stoffen zusätzlich reduziert, zum Beispiel bei besonders strengen Anforderungen an die Ablaufqualität. Dieses können vorteilhaft Lamellenabscheider z.B. im Reaktions- und Sedimentationsbecken sein oder eine nachgeschaltete Filtrationsstufe.

Die Erfindung kann vorteilhaft zur Reinigung von kommunalem, industriellem oder gemischtem Abwasser für eine besonders effiziente und wirtschaftliche Abwasserreinigung verwendet werden. Vorteilhaft können die einzelnen Becken der erfindungsgemäßen Abwasserreinigungsanlage grundsätzlich beliebige Formen, wie rechteckig oder rund, haben und aus beliebigen geeigneten Materialien errichtet werden.

Die erwähnten Fördereinrichtungen an den Verbindungsstellen zwischen dem Reaktions- und Sedimentationsbecken und dem Einlaufmischbecken können zur Förderung von Rücklaufschlamm von dem Reaktions- und Sedimentationsbecken in das Einlaufmischbecken jeweils in einer ersten Pumprichtung betätigt werden. Zusätzlich kann jede der Fördereinrichtungen in entgegen gesetzter Pumprichtung betätigt werden, um Abwasser von dem Einlaufmischbecken in das Reaktions- und Sedimentationsbecken zu fördern. Gemäß einer vorteilhaften Weiterbildung der Erfindung ist eine Steuerungseinrichtung zur Steuerung der Betätigung der ersten und der zweiten Fördereinrichtung vorgesehen. Die Steuerungseinrichtung kann in Form einer separaten Steuerung für die erste Fördereinrichtung und einer separaten Steuerung für die zweite Fördereinrichtung oder als integrierte Steuereinrichtung für beide Fördereinrichtungen ausgestaltet sein. Die Steuerungseinrichtung ist dazu eingerichtet, entweder die erste oder die zweite Fördereinrichtung zur Förderung von Rücklaufschlamm von dem Reaktions- und Sedimentationsbecken in das Einlaufmischbecken zu betätigen. Hierdurch wird eine definierte Rückförderung des Rücklaufschlamms in das Einlaufmischbecken von dem gerade in der Sedimentationsphase befindlichen Beckenteil gewährleistet. Die Steuerungseinrichtung kann in einem Betriebsmodus vorteilhaft auch zeitlich überlappend, für einen im Vergleich zur Dauer der Sedimentationsphase kurzen Zeitraum, beide Fördereinrichtungen zur Förderung von Rücklaufschlamm von dem Reaktions- und Sedimentationsbecken in das Einlaufmischbecken betätigen. Der Zeitraum der zeitlich überlappenden Betätigung kann z.B. bis zu zwei Stunden betragen.

Gemäß einer vorteilhaften Weiterbildung der Erfindung weist das Reaktions- und Sedimentationsbecken einen Reaktionsabschnitt zur Reaktionsbehandlung des Beckeninhalts und einen Sedimentationsabschnitt zur simultanen Sedimentation des Beckeninhalts auf. Vorteilhaft kann, zumindest in bestimmten Zeitabschnitten, eine gleichzeitige Reaktionsbehandlung und Sedimentation in dem kombinierten Reaktions- und Sedimentationsbecken erfolgen.

Gemäß einer vorteilhaften Weiterbildung der Erfindung, weist das Reaktions- und Sedimentationsbecken wenigstens einen weiteren Reaktionsabschnitt zur Reaktionsbehandlung des Beckeninhalts auf. Denkbar ist, einen oder mehrere weitere Reaktionsabschnitte vorzusehen, und hierdurch den ersten Beckenabschnitt von dem zweiten Beckenabschnitt räumlich und funktional weiter zu entkoppeln und verschiedene Funktionalitäten der Abwasserreinigung vorzusehen (z. B. Denitrifikation/Nitrifikation).

Gemäß einer vorteilhaften Weiterbildung der Erfindung ist der erste Beckenabschnitt mit dem zweiten Beckenabschnitt über eine Strömungsminderungseinrichtung verbunden. Die Strömungsminderungseinrichtung kann auch zwischen dem ersten Reaktionsabschnitt und einem oder mehreren weiteren Reaktionsabschnitten des Reaktions- und Sedimentationsbeckens vorgesehen sein. Es kann auch mehr als eine Strömungsminderungseinrichtung vorgesehen sein. Durch die Strömungsminderungseinrichtung wird vorteilhaft eine Vermischung der Inhalte der einzelnen Beckenabschnitte, z.B. infolge von Verwirbelungen, gemindert, so dass die Sedimentation ungestörter und damit schneller ablaufen kann. Als Strömungsminderungseinrichtung kann beispielsweise eine im Bereich der oberen Beckenkante angeordnete eintauchende Quertraverse vorgesehen sein. Möglich ist auch eine mit Öffnungen versehene Zwischenwand in dem Becken.

Gemäß einer vorteilhaften Weiterbildung der Erfindung ist die erste Verbindungsstelle mit einer in dem Reaktions- und Sedimentationsbecken angeordneten ersten Verteilereinrichtung verbunden. Alternativ oder zusätzlich kann die zweite Verbindungsstelle mit einer in dem Reaktions- und Sedimentationsbecken angeordneten zweiten Verteilereinrichtung verbunden sein. Durch die Verteilereinrichtung kann eine gleichmäßigere, besser verteilte Einleitung von zu reinigendem Abwasser am Boden des Reaktions- und Sedimentationsbeckens erfolgen. Zudem kann die Verteilereinrichtung in umgekehrter Betriebsrichtung zum Absaugen von Rücklaufschlamm verwendet werden und bewirkt hierbei ein gleichmäßigeres Aufnehmen des Rücklaufschlamms.

Gemäß einer vorteilhaften Weiterbildung der Erfindung ist die erste Verteilereinrichtung und/oder die zweite Verteilereinrichtung als Verteilerrohr ausgebildet. Das Verteilerrohr kann über seine Längserstreckung eine Vielzahl von Öffnungen aufweisen. Hierdurch kann eine gleichmäßige Verteilung von einlaufendem Abwasser und eine gleichmäßige Aufnahme von abgesaugtem Rücklaufschlamm erreicht werden. Das Verteilerrohr kann sich vorteilhaft über die Breite des Reaktions- und Sedimentationsbeckens erstrecken.

Gemäß einer vorteilhaften Weiterbildung der Erfindung ist das Einlaufmischbecken zumindest teilweise in einem von dem Reaktions- und Sedimentationsbecken umgebenden Bereich angeordnet. Hierdurch ist die erfindungsgemäße Abwasserreinigungsanlage besonders kompakt und Platz sparend zu errichten. Zudem fallen die Verbindungen zwischen dem Einlaufmischbecken und dem Reaktions- und Sedimentationsbecken an der ersten und der zweiten Verbindungsstelle relativ kurz aus. Hierdurch wird der Aufwand beim Errichten der erfindungsgemäßen Abwasserreinigungsanlage weiter verringert, was zu geringeren Herstellkosten führt. Zudem sind die Verbindungsstellen strömungsgünstiger ausführbar, d.h., es kann ein geringerer Strömungswiderstand erreicht werden als bei längeren Verbindungsleitungen.

Gemäß einer vorteilhaften Weiterbildung der Erfindung ist das Reaktions- und Sedimentationsbecken über eine weitere Verbindungsstelle mit einem Schlammnachbehandlungsbecken verbunden. Mittels des Schlammnachbehandlungsbeckens kann eine weitergehende Schlammbelüftung durchgeführt werden, z.B. zum Erreichen einer Schlammstabilisierung. Das Schlammnachbehandlungsbecken wird mit überschüssigem Schlamm beschickt. Die Beschickung des Schlammnachbehandlungsbeckens erfolgt nach einer Sedimentationsphase in dem Schlammnachbehandlungsbecken. Die Beschickung erfolgt aus dem Reaktions- und Sedimentationsbecken, aus dem Einlaufmischbecken oder vorteilhaft aus einer als Schacht ausgebildeten Verbindungsstelle zwischen dem Reaktions- und Sedimentationsbecken und dem Einlaufmischbecken. Vorteilhaft erfolgt die Beschickung dabei aus einem in der Sedimentationsphase befindlichen Beckenabschnitt bzw. bezogen auf die Verbindungsstelle aus der Phase der Rücklaufschlammförderung. Im oberen Bereich bildet sich im Schlammnachbehandlungsbecken so genanntes Schlammwasser, d.h. Wasser mit einem relativ geringen Schlammanteil. Bei Beschickung des Schlammnachbehandlungsbeckens mit Überschussschlamm wird das Schlammwasser in ein benachbartes Becken verdrängt. Auf diese Weise dickt der Schlamm im Schlammnachbehandlungsbecken ein.

Gemäß einer vorteilhaften Weiterbildung der Erfindung ist das Schlammnachbehandlungsbecken zumindest teilweise in einem von dem Reaktions- und Sedimentationsbecken umgebenden Bereich angeordnet. Hierdurch kann die erfindungsgemäße Abwasserreinigungsanlage kompakt und Platz sparend errichtet werden. Zudem können kurze Verbindungswege zwischen dem Schlammnachbehandlungsbecken und den übrigen Becken realisiert werden.

Gemäß einer vorteilhaften Weiterbildung der Erfindung ist dem Einlaufmischbecken ein Speicherbecken vorgeschaltet. Das Speicherbecken dient vorteilhaft als Puffer, um Belastungsspitzen aus einem Zulauf für das Abwasser auszugleichen.

Gemäß einer vorteilhaften Weiterbildung der Erfindung ist die erste und/oder die zweite Verbindungsstelle zumindest teilweise vertikal verlaufend schachtartig ausgebildet. Eine solche schachtartige vertikale Ausbildung zumindest eines Teils der Verbindungsstelle bietet vorteilhafte Einbaumöglichkeiten für die jeweilige Fördereinrichtung. Zudem kann aufgrund des vertikalen Verlaufs ein Höhenunterschied zwischen dem Einlaufmischhecken und dem zugeordneten Abschnitt des Reaktions- und Sedimentationsbeckens vorgesehen werden, derart, dass ein Zufluss von Abwasser von dem Einlaufmischbecken in das Reaktions- und Sedimentationsbecken aufgrund von Höhenunterschieden auch ohne Betätigung der Fördereinrichtung erfolgen kann. Hierdurch kann die Fördereinrichtung geschont werden. Zudem kann der Energieverbrauch reduziert werden. Ein Einschalten der Fördereinrichtung ist dann lediglich für die Rückförderung von Rücklaufschlamm in das Einlaufmischbecken erforderlich. Selbstverständlich kann die Fördereinrichtung trotzdem ergänzend zur Förderung von Abwasser von dem Einlaufmischbecken in das Reaktions- und Sedimentationsbeckens betätigt werden, z.B. zur Beschleunigung der Abwasserzufuhr.

Gemäß einer vorteilhaften Weiterbildung der Erfindung ist die erste bzw. die zweite Fördereinrichtung in einer vertikalen Wand eines schachtartigen Bereichs der ersten bzw. der zweiten Verbindungsstelle angeordnet. Dies erlaubt vorteilhaft eine einfache Unterbringung einer handelsüblichen Pumpe. Vorteilhaft ist die jeweilige Fördereinrichtung in einer dem Einlaufmischbecken zugewandten vertikalen Wand des schachtartigen Bereichs angeordnet.

Der schachtartige Bereich kann vorteilhaft als Verbindungsschacht ausgebildet sein. Der schachtartige Bereich bzw. der Verbindungsschacht kann in dem Einlaufmischbecken oder dem Reaktions- und Sedimentationsbecken angeordnet sein. Vorteilhaft ist auch eine teilweise Anordnung des schachtartigen Bereichs bzw. des Verbindungsschachts in dem Einlaufmischbecken und dem Reaktions- und Sedimentationsbecken. Vorteilhaft hat der schachtartige Bereich bzw. der Verbindungsschacht dabei die Funktion, eine Verbindung zwischen dem Einlaufmischbecken und dem Reaktions- und Sedimentationsbecken herzustellen.

Gemäß einer vorteilhaften Weiterbildung der Erfindung ist ein Schlammnachbehandlungsbecken mit biologischer Aktivität vorgesehen, das besondere Eigenschaften aufweist. So ist eine im unteren Beckenbereich des Schlammnachbehandlungsbeckens angeordnete Schlammzuführungsstelle und eine in einem weiter oben gelegenen Beckenbereich des Schlammnachbehandlungsbeckens angeordnete Schlammwasserablaufstelle oder ein Schlammwasserüberlauf vorgesehen. Das Schlammnachbehandlungsbecken kann mit einer Belüftungs- und/oder Durchmischeinrichtung versehen sein. Das Schlammnachbehandlungsbecken kann belüftet, anoxisch oder anaerob betrieben werden, was gegenüber konventionellen Anlagen den Vorteil hat, dass die Schlammeindickung in demselben Becken in Kombination mit einer biologischen Reaktion erfolgen kann. Bei bekannten Anlagen ist hingegen lediglich die Funktion des Eindickens vorgesehen.

Bei der anaeroben Betriebsweise kann das Schlammnachbehandlungsbecken vorteilhaft gasdicht abgedeckt und mit einem geeigneten Abzug für das Klärgas ausgestattet sein.

Bei nicht-anaerober Betriebsweise kann für den Ablauf des überstehenden Schlammwassers ein einfacher Schlammwasserüberlauf vorgesehen sein, z.B. an der Beckenoberkante, da Schlammnachbehandlungsbecken in dieser Betriebsweise nicht gasdicht geschlossen sein muss.

Das Schlammnachbehandlungsbecken hat eine Schlammentnahmemöglichkeit. Die Beschickung des Beckens erfolgt nach einer Absetzzeit ohne Umwälzung oder Belüftung, so dass das überstehende Schlammwasser abläuft und hierdurch eine Aufkonzentrierung des nachzubehandelnden Schlamms erreicht wird. Vorteilhaft läuft das überstehende Schlammwasser durch den Verdrängungseffekt infolge der neuen Beschickung des Beckens ab, ohne dass zusätzliche mechanische bzw. bewegliche Bauteile hierfür vorhanden sein müssen. So wird z.B. keine Trübwasserabzugseinrichtung wie bei bekannten Anlagen benötigt. Der Verdrängungseffekt bewirkt einen Ablauf des Schlammwassers im oberen Beckenbereich, während darunter liegender Schlamm eindickt.

Gemäß einer vorteilhaften Weiterbildung der Erfindung ist die Schlammwasserablaufstelle mit dem Reaktions- und Sedimentationsbecken und/oder dem Einlaufmischbecken verbunden. Sofern das Schlammnachbehandlungsbecken nicht anaerob betrieben wird, kann die Schlammwasserablaufstelle relativ einfach aufgebaut sein, z.B. in Form eines Überlaufs am oberen Beckenrand. Bei Beschickung des Schlammnachbehandlungsbeckens mit Überschussschlamm wird das Schlammwasser in ein benachbartes Becken verdrängt.

Gemäß einer vorteilhaften Weiterbildung der Erfindung ist die Schlammwasserablaufstelle auf der der Schlammzuführungsstelle gegenüber liegenden Seite des Schlammnachbehandlungsbeckens angeordnet. Hierdurch wird ein gleichgerichteter Betrieb des Schlammnachbehandlungsbeckens ermöglicht, d.h., es können Verwirbelungen des Beckeninhalts weitgehend vermieden werden, da die Fließrichtungen an der Schlammwasserablaufstelle und der Schlammzuführungsstelle gleichgerichtet sind.

Gemäß einer vorteilhaften Weiterbildung der Erfindung ist die Installation eines Vorklärbeckens vor dem Einlaufmischbecken vorgesehen, vorteilhaft mit einer Zufuhr des Vorklärschlammes in das Schlammnachbehandlungsbecken. Hierdurch kann insbesondere bei anaerobem Betrieb in erheblichem Maße Energie eingespart werden.

Bei einem erfindungsgemäßen Verfahren zur Abwasserreinigung ist vorgesehen, dass das zu reinigende Abwasser erst einem Einlaufmischbecken und dann einem kombinierten Reaktions- und Sedimentationsbecken zugeführt wird, wobei in einer Betriebsphase der Abwasserreinigungsanlage zu reinigendes Abwasser dem Reaktions- und Sedimentationsbecken über eine erste im unteren Beckenbereich, z.B. in Bodennähe, des Reaktions- und Sedimentationsbeckens angeordnete Beschickungs- oder Verbindungsstelle zugeführt wird und an einer zweiten im unteren Beckenbereich, z.B. in Bodennähe, des Reaktions- und Sedimentationsbeckens angeordneten Verbindungsstelle Rücklaufschlamm von dem Reaktions- und Sedimentationsbecken in das Einlaufmischbecken geführt wird. Das Verfahren kann insbesondere zum Betrieb einer Abwasserreinigungsanlage der zuvor beschriebenen Art verwendet werden. Hierdurch ist eine effiziente und kostengünstige Abwasserreinigung möglich.

Gemäß einer vorteilhaften Weiterbildung der Erfindung wird in einer anderen Betriebsphase der Abwasserreinigungsanlage das Reaktions- und Sedimentationsbecken in umgekehrter Fließrichtung betrieben. Hierbei wird zu reinigendes Abwasser dem Reaktions- und Sedimentationsbecken über die zweite Verbindungsstelle oder eine zweite Beschickungsstelle zugeführt und an der ersten Verbindungsstelle Rücklaufschlamm von dem Reaktions- und Sedimentationsbecken in das Einlaufmischbecken geführt.

Gemäß einer vorteilhaften Weiterbildung der Erfindung ist die erste Verbindungsstelle zugleich die erste Beschickungsstelle und/oder die zweite Verbindungsstelle zugleich die zweite Beschickungsstelle, was die bereits oben erläuterte vorteilhafte Doppelfunktion der jeweiligen Verbindungsstelle ermöglicht.

Gemäß einer vorteilhaften Weiterbildung der Erfindung ist vorgesehen, dass ein Abschnitt des Reaktions- und Sedimentationsbeckens als Reaktionsabschnitt zur Reaktionsbehandlung des Beckeninhalts und ein anderer ein Abschnitt des Reaktions- und Sedimentationsbecken als Sedimentationsabschnitt zur zumindest zeitweise gleichzeitigen Reaktionsbehandlung des Beckeninhalts betrieben wird, wobei der Reaktionsabschnitt und der Sedimentationsabschnitt je nach Betriebsphase der Abwasserreinigungsanlage wechseln.

Gemäß einer vorteilhaften Weiterbildung der Erfindung ist vorgesehen, dass Klarwasser aus dem Reaktions- und Sedimentationsbecken über eine Klarwasserabzugsstelle entnommen wird, die im Sedimentationsabschnitt angeordnet ist.

Gemäß einer vorteilhaften Weiterbildung der Erfindung ist vorgesehen, dass eine zeitlich überlappende Entnahme von Klarwasser aus dem Reaktions- und Sedimentationsbecken und Rückführung von Rücklaufschlamm von dem Reaktions- und Sedimentationsbecken in das Einlaufmischbecken erfolgt.

Gemäß einer vorteilhaften Weiterbildung der Erfindung ist vorgesehen, dass eine zeitlich überlappende Zufuhr von zu reinigendem Abwasser in das Reaktions- und Sedimentatiönsbecken und Rückführung von Rücklaufschlamm von dem Reaktions- und Sedimentationsbecken in das Einlaufmischbecken erfolgt.

Gemäß einer vorteilhaften Weiterbildung der Erfindung ist vorgesehen, dass eine Entnahme von Klarwasser aus dem Reaktions- und Sedimentationsbecken und eine Rückführung von Rücklaufschlamm von dem Reaktions- und Sedimentationsbecken in das Einlaufmischbecken gleichgerichtet erfolgt. Gleichgerichtet bedeutet, dass die Fließrichtung gleich ist. Durch die gleiche Fließrichtung werden Verwirbelungen vermieden, die zu einer unerwünschten Durchmischung von Klarwasser und Schlamm führen können.

Gemäß einer vorteilhaften Weiterbildung der Erfindung wird ein Verfahren zur Abwasserreinigung vorgeschlagen, bei dem sedimentierter Schlamm einem aerob, anoxisch oder anaerob betriebenen Schlammnachbehandlungsbecken zugeführt wird und durch Verdrängung infolge der Schlammzuführung höher gelegenes Schlammwasser aus dem Schlammnachbehandlungsbecken abläuft. Bei einem solchen Betrieb kann das Schlammnachbehandlungsbecken kostengünstig realisiert werden, insbesondere ohne Trübwasserabzugseinrichtung. Auch ist hierdurch ein hinsichtlich des Energieverbrauchs sparsamer Betrieb möglich.

Gemäß weiterer vorteilhafter Weiterbildungen der Erfindung ist folgendes vorgesehen:
Abwasserreinigungsanlage der zuvor beschriebenen Art, wobei das Reaktions- und Sedimentationsbecken wenigstens einen weiteren Reaktionsabschnitt zur Reaktionsbehandlung des Beckeninhalts aufweist.
Abwasserreinigungsanlage der zuvor beschriebenen Art, wobei der erste Beckenabschnitt mit dem zweiten Beckenabschnitt über eine Strömungsminderungseinrichtung verbunden ist.
Abwasserreinigungsanlage der zuvor beschriebenen Art, wobei die erste Verbindungsstelle mit einer in dem ersten Beckenabschnitt angeordneten ersten Verteilereinrichtung und/oder die zweite Verbindungsstelle mit einer in dem zweiten Beckenabschnitt angeordneten zweiten Verteilereinrichtung verbunden ist.
Abwasserreinigungsanlage der zuvor beschriebenen Art, wobei die erste Verteilereinrichtung und/oder die zweite Verteilereinrichtung als Verteilerrohr ausgebildet ist.
Abwasserreinigungsanlage der zuvor beschriebenen Art, wobei das Einlaufmischbecken zumindest teilweise in einem von dem Reaktions- und Sedimentationsbecken umgebenen Bereich angeordnet ist.
Abwasserreinigungsanlage der zuvor beschriebenen Art, wobei das Schlammnachbehandlungsbecken zumindest teilweise in einem von dem Reaktions- und Sedimentationsbecken umgebenen Bereich angeordnet ist.
Abwasserreinigungsanlage der zuvor beschriebenen Art, wobei dem Einlaufmischbecken ein Speicherbecken vorgeschaltet ist.
Abwasserreinigungsanlage der zuvor beschriebenen Art, wobei die erste und/oder die zweite Verbindungsstelle zumindest teilweise vertikal verlaufend schachtartig ausgebildet ist.
Abwasserreinigungsanlage der zuvor beschriebenen Art, wobei die erste bzw. die zweite Fördereinrichtung in einer vertikalen Wand eines schachtartigen Bereichs der ersten bzw. der zweiten Verbindungsstelle angeordnet ist.
Abwasserreinigungsanlage der zuvor beschriebenen Art, wobei in dem Einlaufmischbecken, dem kombinierten Reaktions- und Sedimentationsbecken und/oder dem Schlammnachbehandlungsbecken zumindest eine Belüftungseinrichtung und/oder eine Durchmischeinrichtung vorgesehen ist.

Verfahren der zuvor beschriebenen Art, wobei Klarwasser aus dem Reaktions- und Sedimentationsbecken über eine Klarwasserabzugsstelle entnommen wird, die im Sedimentationsabschnitt angeordnet ist.

Verfahren der zuvor beschriebenen Art, wobei eine zeitlich überlappende Entnahme von Klarwasser aus dem Reaktions- und Sedimentationsbecken und Rückführung von Rücklaufschlamm von dem Reaktions- und Sedimentationsbecken in das Einlaufmischbecken erfolgt.

Verfahren der zuvor beschriebenen Art, wobei eine zeitlich überlappende Zufuhr von zu reinigendem Abwasser in das Reaktions- und Sedimentationsbecken und Rückführung von Rücklaufschlamm von dem Reaktions- und Sedimentationsbecken in das Einlaufmischbecken erfolgt.

Verfahren der zuvor beschriebenen Art, wobei eine Entnahme von Klarwasser aus dem Reaktions- und Sedimentationsbecken und eine Rückführung von Rücklaufschlamm von dem Reaktions- und Sedimentationsbecken in das Einlaufmischbecken gleichgerichtet erfolgt.

Die Erfindung wird nachfolgend anhand von Ausführungsbeispielen unter Verwendung von Zeichnungen näher erläutert.

Es zeigen
- Figur 1 -: eine erste Ausführungsform der Abwasserreinigungsanlage aus der Vogelperspektive in Draufsicht und
- Figur 2 -: einen Ausschnitt der Abwasserreinigungsanlage gemäß Fig. 1 in seitlicher Schnittansicht und
- Figur 3 -: einen weiteren Ausschnitt der Abwasserreinigungsanlage gemäß Fig. 1 in seitlicher Schnittansicht und
- Figur 4 -: einen weiteren Ausschnitt der Abwasserreinigungsanlage gemäß Fig. 1 in seitlicher Schnittansicht und
- Figur 5 -: eine weitere Ausführungsform der Abwasserreinigungsanlage aus der Vogelperspektive in perspektivischer Ansicht und
- Figur 6 -: eine weitere Ausführungsform der Abwasserreinigungsanlage aus der Vogelperspektive in Draufsicht und
- Figur 7 -: eine weitere Ausführungsform der Abwasserreinigungsanlage aus der Vogelperspektive in Draufsicht.

In den Figuren werden gleiche Bezugszeichen füreinander entsprechende Elemente verwendet.

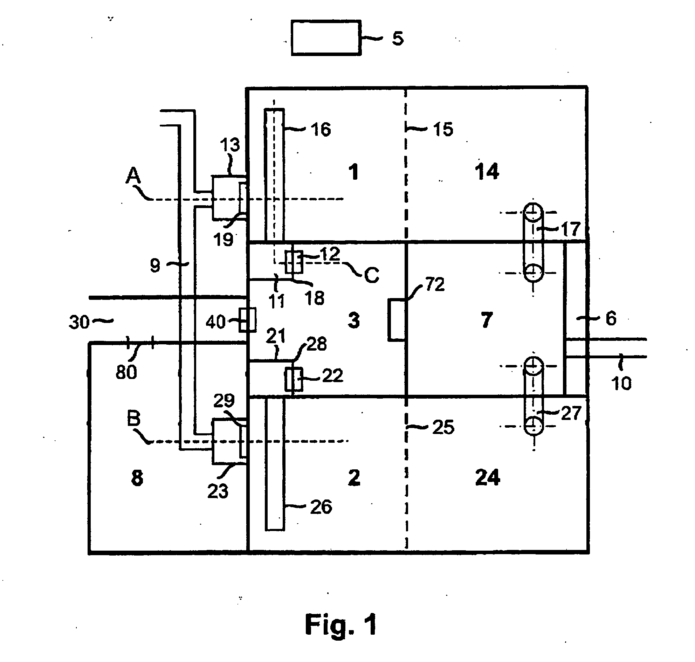

Die Abwasserreinigungsanlage gemäß Figur 1 weist einen Zulaufkanal 30 auf, über den zu reinigendes Abwasser beispielsweise aus der Kanalisation und ggf. nach einer Vorklärung zugeführt wird. Der Zulaufkanal 30 ist über eine Verbindungsstelle 80 mit einem Speicherbecken 8 verbunden. Das Speicherbecken 8 dient zum Auffangen und Puffern des zugeführten Abwassers, wenn der Zustrom des Abwassers die Aufnahmekapazität der Abwasserreinigungsanlage temporär übersteigt. Aus dem Speicherbecken 8 kann bei Bedarf jederzeit Abwasser entnommen werden.

Der Zulaufkanal 30 mündet über eine Verbindungsstelle 40 in ein Einlaufmischbecken 3. Die Verbindungsstelle 40 kann in der Höhe derart angeordnet werden, dass sie oberhalb eines für den Betrieb der Abwasserreinigungsanlage erwünschten Flüssigkeitspegels des Einlaufmischbeckens 3 liegt.

Das Einlaufmischbecken 3 ist über eine erste Verbindungsstelle 11 und eine zweite Verbindungsstelle 21 mit einem Reaktions- und Sedimentationsbecken 1, 2 verbunden. Das Reaktions- und Sedimentationsbecken 1, 2 weist gemäß der Ausführungsform der Figur 1 eine Mehrzahl von Beckenabschnitten auf. Ein erster Beckenabschnitt 1 ist mit der ersten Verbindungsstelle 11 verbunden und im Bereich der ersten Verbindungsstelle 11 neben dem Einlaufmischbecken 3 angeordnet. An einer anderen Stelle des Einlaufmischbeckens, vorteilhaft auf der gegenüberliegenden Seite des Einlaufmischbeckens 3, ist ein zweiter Beckenabschnitt 2 vorgesehen, mit der zweiten Verbindungsstelle 21 verbunden ist und im Bereich der zweiten Verbindungsstelle 21 neben dem Einlaufmischbecken 3 angeordnet ist. An den ersten Beckenabschnitt 1 schließt sich ein Reaktionsabschnitt 14 an. An diesen schließt sich ein Verbindungskanal 6 an. An den Verbindungskanal 6 schließt sich ein Reaktionsabschnitt 24 an. Der Reaktionsabschnitt 24 grenzt an den zweiten Beckenabschnitt 2 an. Die Beckenabschnitte 1, 14, 24, 2 sowie der Verbindungskanal 6 sind miteinander verbunden, so dass zugeführtes Abwasser in einer bestimmten Fließrichtung, die je nach Betriebsphase der Abwasserreinigungsanlage bestimmt wird, von dem ersten Beckenabschnitt 1 zu dem zweiten Beckenabschnitt 2 und umgekehrt gelangen kann.

Die erste Verbindungsstelle 11 und die zweite Verbindungsstelle 21 sind als Verteilerschacht ausgebildet, der zumindest teilweise vertikal verläuft und zumindest teilweise über die Höhe des Einlaufmischbeckens bzw. über die Höhe des ersten oder des zweiten Beckenabschnitts 1, 2 vertikal verlaufen kann. In einer vertikal verlaufenden Wand 18, 28 des jeweiligen Verteilerschachts 11, 21 ist eine jeweilige Propellerpumpe 12, 22 angeordnet. Die Propellerpumpe dient zur Förderung von Rücklaufschlamm von dem ersten bzw. dem zweiten Beckenabschnitt in das Einlaufmischbecken 3. Die Pumpe 12, 22 kann auch in umgekehrter Betriebsrichtung betrieben werden. In diesem Fall fördert die Pumpe 12, 22 die Mischung aus Abwasser und belebtem Schlamm von dem Einlaufmischbecken 3 in den ersten bzw. zweiten Beckenabschnitt 1, 2.

Zwischen dem ersten Beckenabschnitt 1 und dem Reaktionsabschnitt 14 ist eine erste Strömungsminderungseinrichtung 15 vorgesehen. Analog dazu ist zwischen dem zweiten Beckenabschnitt 2 und dem Reaktionsabschnitt 24 eine zweite Strömungsminderungseinrichtung 25 vorgesehen.

Der jeweilige Verteilerschacht 11, 21 mündet in ein im jeweiligen Beckenabschnitt 1, 2 in Bodennähe angeordnetes Verteilerrohr 16, 26. Das Verteilerrohr 16, 26 verteilt bei Zufuhr von Abwasser von dem Einlaufmischbecken in das Reaktions- und Sedimentationsbecken das zulaufende Abwasser gleichmäßig am Boden des Reaktions- und Sedimentationsbeckens 1, 2. Bei einer Rücklaufschlammförderung von dem Reaktions- und Sedimentationsbecken 1, 2 in das Einlaufmischbecken wird der Rücklaufschlamm über eines der Verteilerrohre 16, 26 angesaugt und über den jeweiligen Verteilerschacht 11, 21 in das Einlaufmischbecken 3 zurückgeführt.

Das Reaktions- und Sedimentationsbecken 1, 2 kann in zwei Fließrichtungen betrieben werden. In einer ersten Fließrichtung, die in einer ersten Betriebsphase der Abwasserreinigungsanlage eingenommen wird, ist der erste Beckenabschnitt 1 der Reaktionsabschnitt und der zweite Beckenabschnitt 2 der Sedimentationsabschnitt. In einer zweiten Betriebsphase der Abwasserreinigungsanlage ist der erste Beckenabschnitt 1 der Sedimentationsabschnitt und der zweite Beckenabschnitt 2 der Reaktionsabschnitt. In dem Reaktionsabschnitt erfolgt die biologische Abwasserreinigung. In dem Reaktionsabschnitt werden entsprechend der jeweiligen Auslegung und Betriebsart der Abwasserreinigungsanlage z.B, die Kohlenstoffverbindungen biologisch abgebaut, Ammonium nitrifiziert und/oder Nitrat denitrifiziert. Die Betriebsweise des ersten in Fließrichtung liegenden Abschnitts des Reaktions- und Sedimentationsbeckens 1, 2 wird batchweise umgestellt von der Reaktion, d.h. der biologischen Aktivität zur Reinigung des Abwassers, auf die Sedimentation. Nach einer Umstellung der Fließrichtung übernimmt derjenige Beckenabschnitt, der zuvor die Funktion z.B. der Kohlenstoffelimination, der Denitrifikation und/oder der Nitrifikation ausgeführt hat, die Funktion der Sedimentation.

In demjenigen Beckenabschnitt, der als Sedimentationsabschnitt verwendet wird, werden die ggf. vorhandenen Belüftungseinrichtungen und Durchmischeinrichtungen, z.B. Rührwerke, abgeschaltet. Der belebte Schlamm sedimentiert dann. Direkt bei Umstellung der Fließrichtung oder auch nach einer Sedimentationszeit wird über das zugehörige Verteilerrohr 16, 26 Rücklaufschlamm mittels der zugehörigen Pumpe 12, 22 in das Einlaufmischbecken 3 gefördert.

Der erste und der zweite Beckenabschnitt 1,2 weisen jeweils eine zugeordnete Klarwasserabzugsstelle 13, 23 auf. Die Klarwasserabzugsstelle 13, 23 ist im oberen Beckenbereich angeordnet und dient zur Entnahme des gereinigten Abwassers, d.h, des Klarwassers. Die Klarwasserabzugsstelle 13, 23, kann mit dem ersten bzw. dem zweiten Beckenabschnitt 1, 2 über eine zu öffnende Verbindungsstelle 19, 29, z.B. einen Absenkschieber oder ein höhenverstellbares Wehr, verbunden sein. Das Klarwasser wird dabei aus demjenigen Beckenabschnitt des Reaktions- und Sedimentationsbeckens 1, 2 entnommen, der je nach Betriebsphase als Sedimentationsabschnitt wirkt. Nach einer gewissen Zeitspanne der Sedimentation wird über die Klarwasserabzugsstelle 13, 23 Klarwasser über eine Rohrleitung 9 abgeführt.

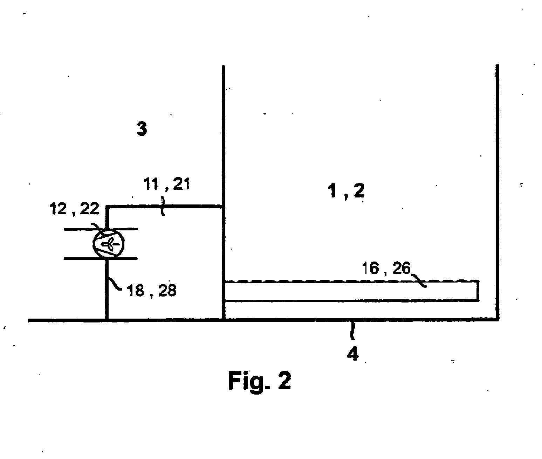

Die Figur 2 zeigt in seitlicher Schnittdarstellung, z.B. entlang der Linie C in Fig. 1, die Verbindung zwischen dem Einlaufmischbecken 3 und dem ersten Beckenabschnitt 1. Die Verbindung zwischen dem Einlaufmischbecken 3 und dem zweiten Beckenabschnitt 2 ist vergleichbar ausgeführt. Erkennbar ist die in einem vertikal verlaufenden Wandabschnitt 18, 28 des Verteilerschachts 11, 21 eingebaute Propellerpumpe 12, 22 sowie das mit Öffnungen versehene Verteilerrohr 16, 26, das in Bodennähe in dem ersten bzw. in dem zweiten Beckenbereich 1, 2 angeordnet ist. Vorteilhaft ist die Pumpe 12, 22 in vertikaler Richtung etwas höher angeordnet als die Verbindungsstelle des Verteilerschachts 11, 21 zu dem ersten bzw. zweiten Beckenbereich 1, 2. Hierdurch wird eine Durchmischung im Zulaufschacht erreicht und die Installation der Pumpe 12, 22 wird dadurch vereinfacht. Über ein Einschalten der Pumpe 12, 22 kann von dem als Sedimentationsabschnitt betriebenen Beckenbereich 1, 2 Rücklaufschlamm in das Einlaufmischbecken 3 zurückgefördert werden.

Durch die Anordnung des Verteilerrohres 16, 26, oder allgemeiner gesagt der Verbindungsstelle 11, 21, und der darüber liegenden Klarwasserabzugsstelle 13, 23 im gleichen Beckenbereich des Reaktions- und Sedimentationsbeckens entsteht eine gleichgerichtete Strömung von dem Reaktionsabschnitt in den Sedimentationsabschnitt. Durch die gleichgerichtete Strömung werden Verwirbelungen vermieden. Dies erlaubt eine besonders effektive Sedimentation.

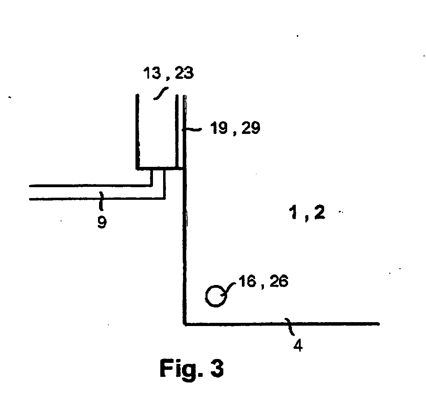

Die Figur 3 zeigt einen Teil des Reaktions- und Sedimentationsbeckens in seitlicher Schnittdarstellung, z.B. entlang der Linie A oder B in Fig. 1. Erkennbar ist das in Bodennähe angeordnete Verteilerrohr 16, 26 und die im oberen Beckenbereich angeordnete Klarwasserabzugsstelle 13, 23. Über die zu öffnende Verbindungsstelle 19, 29, die z.B. als Klappe, Absenkschieber oder höhenverstellbares Wehr ausgestaltet sein kann, kann aus dem oberen Beckenbereich des Sedimentationsabschnitts Klarwasser über die Rohrleitung 9 entnommen werden.

In der Figur 1 ist ferner ein Schlammnachbehandlungsbecken 7 dargestellt, das in dem von dem Einlaufmischbecken 3, dem Reaktions- und Sedimentationsbecken 1, 2, den Reaktionsabschnitten 14, 24 und dem Verbindungskanal 6 umgebenen Bereich liegt. Das Schlammnachbehandlungsbecken 7 ist über jeweilige Zulaufrohre 17, 27 mit dem Reaktions- und Sedimentationsbecken 1, 2 verbunden. Die Zulaufrohre 17, 27 führen vom Reaktions- und Sedimentationsbeckens 1, 2 zu dem Boden des Schlammnachbehandlungsbeckens 7. Hierbei können die Zulaufrohre 17, 27 beispielsweise über die Beckenoberkante hinübergeführt oder durch die Beckenwand hindurchgeführt sein. Die Zulaufrohre 17, 27 dienen der Zuführung von Schlamm zu dem Schlammnachbehandlungsbecken 7. Hierzu sind in den Zulaufrohren 17, 27 entsprechende Pumpen vorgesehen. Der Schlamm kann auch vorteilhaft während der Sedimentationsphase des angeschlossenen Beckenteils aus dem Verbindungsschacht 11, 21 entnommen werden. Neben den Zulaufrohren 17, 27 können auch weitere Schlammabzugseinrichtungen im Reaktions- und Sedimentationsbecken 1, 2 für eine Zuführung von Schlamm zu dem Schlammnachbehandlungsbecken 7 angeordnet werden.

Bei anaerobem Betrieb ist das Schlammnachbehandlungsbecken 7 an seiner Oberseite geschlossen ausgebildet und mit einem Abzug für Klärgas ausgestattet. Das Schlammnachbehandlungsbecken weist eine Abfuhrleitung 10 zur Entnahme von Überschussschlamm auf. Das Schlammnachbehandlungsbecken 7 ist außerdem über eine Verbindungsstelle 72 mit dem Einlaufmischbecken 3 verbunden. Bei nicht-anaeroben Betrieb kann an der Beckenoberkante statt der Verbindungsstelle 72 ein Überlauf zum Einlaufmischbecken 3 vorgesehen sein.

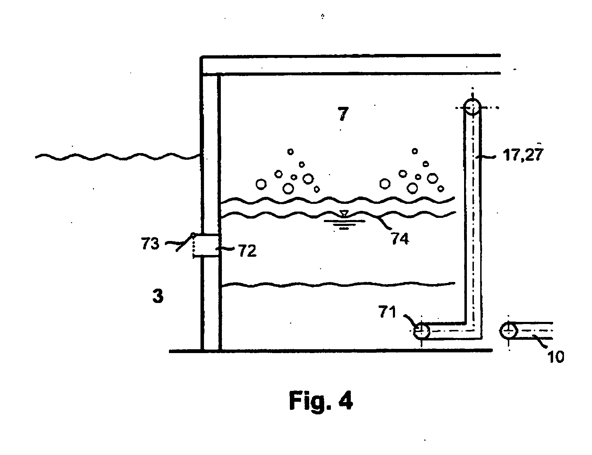

Die Figur 4 zeigt ausschnittsweise die Verbindung zwischen dem Einlaufmischbecken 3 und dem Schlammnachbehandlungsbecken 7 in seitlicher Schnittdarstellung bei anaerober Betriebsweise. Wie erkennbar ist, verläuft das Zulaufrohr 17 bzw. 27 in dem Schlammnachbehandlungsbecken 7 in im Wesentlichen vertikaler Richtung und endet an einer Auslassstelle 71 im Bodenbereich des Schlammnachbehandlungsbeckens 7. In dem Schlammnachbehandlungsbecken 7 sammelt sich ausgehend von dem Beckenboden der Schlamm mit abnehmender Dichte. Die Beschickung des Schlammnachbehandlungsbeckens erfolgt nach einer Sedimentationsphase in dem Schlammnachbehandlungsbecken. Im oberen Bereich bildet sich so genanntes Schlammwasser, d.h. Wasser mit einem relativ geringen Schlammanteil. Bei Beschickung des Schlammnachbehandlungsbeckens 7 mit Überschussschlamm wird das Schlammwasser in das Einlaufmischbecken 3 verdrängt. Wenn das Schlammwasser im Schlammnachbehandlungsbecken 7 einen bestimmten Pegelstand überschreitet, fließt es über eine Verbindungsstelle 72, die über eine Rückschlagklappe 73 schließbar ist, in das Einlaufmischbecken 3. Andernfalls wird das Einlaufmischbecken 3 gegenüber dem Schlammnachbehandlungsbecken 7 durch die vom Wasserdruck im Einlaufmischbecken geschlossene Rückschlagklappe 73 von dem Schlammnachbehandlungsbecken 7 getrennt. Der Wasserspiegel im Schlammnachbehandlungsbecken 7 kann aufgrund des Gasdruckes niedriger liegen als im Einlaufmischbecken, ist aber auf einen Mindestwasserstand 74 über der Verbindungsstelle 72 zu begrenzen, um ein Ausströmen des Gases durch die Verbindungsstelle 72 zu verhindern.

Die Rückführung des Schlammwassers von dem Schlammnachbehandlungsbecken kann auch direkt in einen benachbarten Bereich des Reaktions- und Sedimentationsbeckens 1, 2 erfolgen.

Der Inhalt des Schlammnachbehandlungsbeckens kann bei anaerober Betriebsweise zur Erhöhung der Effizienz erwärmt werden. Hierfür kann eine Erwärmungseinrichtung in dem Schlammnachbehandlungsbecken 7 angeordnet oder der zugeführte Schlamm erwärmt werden.

Die Wirtschaftlichkeit der Abwasserreinigungsanlage kann zusätzlich erhöht werden, in dem in das Schlammnachbehandlungsbecken 7 Vorklarschlamm, externe Schlämme oder andere organische Substrate zugegeben werden. Insbesondere in diesem Fall ist es zusätzlich vorteilhaft, einen Schwimmschlammabzug in dem Schlammnachbehandlungsbecken vorzusehen, über den Schwimmschlamm entnommen werden kann. Es kann auch eine Einrichtung zur Verhinderung von Schwimmschlammbildung vorgesehen werden.

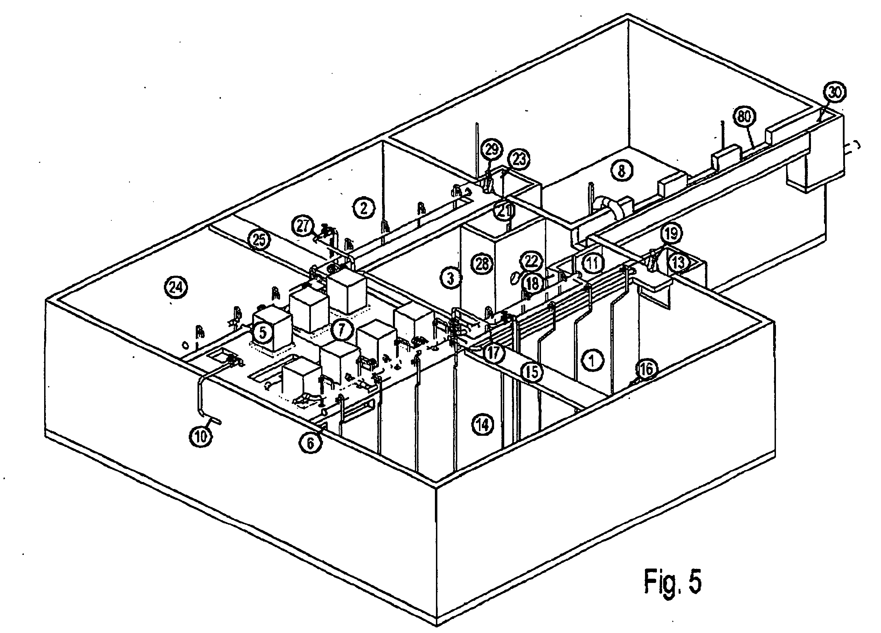

Die Figur 5 zeigt eine weitere Ausführungsform der erfindungsgemäßen Abwasserreinigungsanlage. Wie erkennbar ist, sind die Verteilerschächte 11, 21 bis zur Oberkante des Einlaufmischbeckens 3 geführt und an der Oberseite offen. Zudem sind verschiedene Leitungen einer Belüftungsanlage dargestellt.

In der Figur 1 ist außerdem eine Steuerungseinrichtung 5 zur Steuerung der Betätigung der ersten und der zweiten Pumpe dargestellt. Die Steuerungseinrichtung kann beispielsweise für eine einfache Ein- und Ausschaltung der Pumpen über Relais ausgebildet sein. Denkbar ist auch eine Betätigung der Pumpen über Frequenzumformer oder eine Phasenanschnittsteuerung, um die Pumpe geregelt, d.h. mit einstellbarer Pumpleistung, zu betreiben. Insbesondere kann eine Regelung der von der Pumpe geförderten Flüssigkeit in Abhängigkeit von Betriebsparametern der Abwasserreinigungsanlage vorgesehen sein.

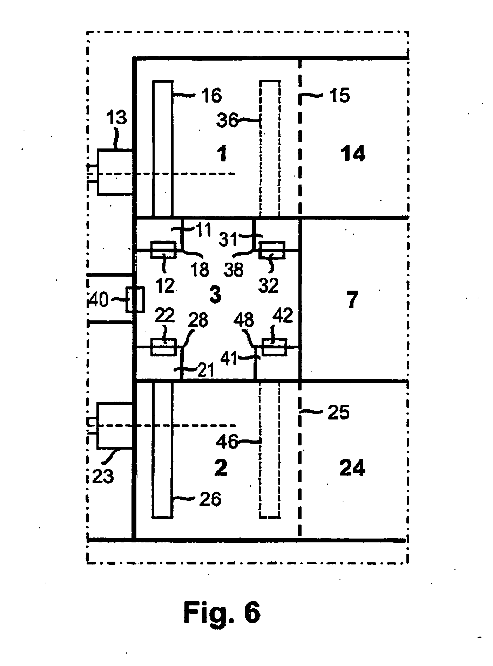

Die Figur 6 zeigt eine weitere Ausführungsform einer erfindungsgemäßen Abwasserreinigungsanlage, die abgesehen von den nachfolgend beschriebenen Elementen im übrigen der Ausführungsform gemäß Figur 1 entspricht. Die Abwasserreinigungsanlage ist in der Figur 6 ausschnittsweise derart dargestellt, dass das Einlaufmischbecken 3 und der erste und der zweite Beckenabschnitt 1, 2 des Reaktions- und Sedimentationsbeckens vollständig erkennbar ist.

Es ist eine dritte Verbindungsstelle 31 zwischen dem Einlaufmischbecken 3 und dem ersten Beckenabschnitt 1 im unteren Beckenbereich des ersten Beckenabschnitts 1 angeordnet. Die dritte Verbindungsstelle 31 verbindet die Becken vorteilhaft in der Nähe des Bodens 4 des Reaktions- und Sedimentationsbeckens. In analoger Weise ist eine vierte Verbindungsstelle 41 zwischen dem Einlaufmischbecken 3 und dem zweiten Beckenabschnitt 2 im unteren Beckenbereich des zweiten Beckenabschnitts 2 angeordnet. Die dritte und die vierte Verbindungsstelle 31, 41 können einen vergleichbaren Aufbau wie die erste und die zweite Verbindungsstelle 11, 21 aufweisen, insbesondere können Sie in Form eines jeweiligen Verbindungsschachts ausgestaltet sein. Die dritte und die vierte Verbindungsstelle 31, 41 weisen eine jeweilige Pumpe 32, 42 auf, die vorteilhaft in einer vertikalen Wand 38 bzw. 48 angeordnet sein kann. Ferner kann die dritte Verbindungsstelle mit einer dritten Verteilereinrichtung 36 und die vierte Verbindungsstelle 41 mit einer vierten Verteilereinrichtung 46 verbunden sein. Die Verteilereinrichtungen 36, 46 können als Verteilerrohre ausgebildet sein. Die Verteilereinrichtungen 36, 46 sind vorteilhaft in der Nähe des Bodens 4 des jeweiligen Beckenabschnitts 1, 2 angeordnet.

Bei der Ausführungsform gemäß Figur 1 sind die Pumpen 12, 22 in einem Wandabschnitt des Verteilerschachts 11 bzw. 21 angeordnet, der von der Verbindungsstelle 40 fortweist. Hierdurch kann eine verbesserte Durchmischung des Inhalts des Einlaufmischbeckens 3 erzielt werden, im Vergleich mit einer Anordnung der Pumpen 12, 22 in aufeinander zuweisenden Wandabschnitt des Verteilerschachts 11 bzw. 21.

Bei der Ausführungsform gemäß Figur 6 sind die Pumpen 12, 22 hingegen in aufeinander zuweisenden Wandabschnitten der Verteilerschächte 11 bzw. 21 angeordnet. Entsprechend sind die Pumpen 32, 42 in aufeinander zuweisenden Wandabschnitten der Verteilerschächte 31 bzw. 41 angeordnet, was sich bei der Anordnung der vier Verteilerschächte gemäß Figur 6 wiederum günstig auf die Durchmischung des Inhalts des Einlaufmischbeckens 3 auswirkt.

An Stelle einer Pumpe können auch andere Komponenten oder Verfahren zur Rücklaufschlammförderung vorgesehen werden, z.B. vorteilhaft eine Rücklaufschlammförderung mittels Lufteinblasung in einem aufsteigenden Rohrabschnitt. Der Verteilerschacht 31, 41 kann auch nur zur Rücklaufschlammförderung und nicht zur Beschickung vorgesehen werden. In einem solchen Fall kann die Beschickung über den Verteilerschacht 11, 21 erfolgen. Es kann auch eine jeweilige Beschickungsstelle zur Zufuhr von zu reinigendem Abwasser von dem Einlaufmischbecken 3 in das kombinierte Reaktions- und Sedimentationsbecken 1, 2 vorgesehen werden, z.B. in Form eine zusätzlichen Öffnung zwischen dem Einlaufmischbecken 3) und dem ersten bzw. dem zweiten Beckenabschnitt.

Durch die Verwendung solcher zusätzlichen Verbindungsstellen 31, 41 kann insbesondere bei räumlich sehr ausgedehnten Beckenabschnitten 1, 2 eine gleichmäßigere Zuführung von zu reinigendem Abwasser von dem Einlaufmischbecken 3 sowie eine Rückführung von Rücklaufschlamm zu dem Einlaufmischbecken 3 erzielt werden. Gegebenenfalls können auch weitere Verbindungsstellen zwischen dem Einlaufmischbecken 3 und dem Reaktions- und Sedimentationsbecken 1, 2 vorgesehen werden, die vorteilhaft über die Längserstreckung der jeweiligen Beckenabschnitte 1, 2 verteilt angeordnet sind.

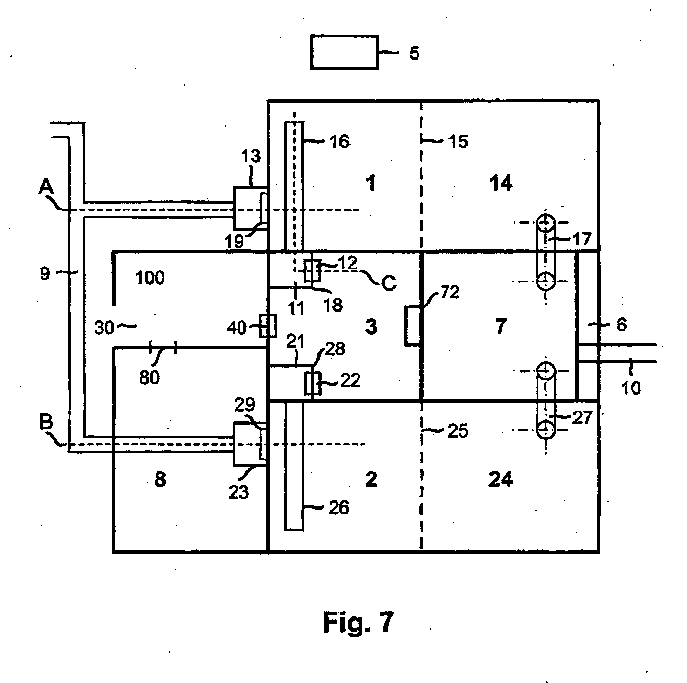

Die Figur 7 zeigt eine weitere Ausführungsform einer erfindungsgemäßen Abwasserreinigungsanlage, bei der neben den anhand der Figur 1 bereits beschriebenen Elementen zusätzlich ein Vorklärbecken 100 vorgesehen ist, das dem Einlaufmischbecken 3 vorgeschaltet ist. In diesem Fall ist der Zulaufkanal für Abwasser als Zulaufstelle 30 ausgebildet.

## Patentansprüche

1. Abwasserreinigungsanlage mit
a) einem Einlaufmischbecken (3),
b) einem kombinierten Reaktions- und Sedimentationsbecken (1, 2) mit einem ersten und einem zweiten Beckenabschnitt,
c) wobei
c1) eine erste Verbindungsstelle (11) zwischen dem Einlaufmischbecken (3) und dem ersten Beckenabschnitt (1) im unteren Beckenbereich des ersten Beckenabschnitts (1) angeordnet ist,
c2) eine erste Fördereinrichtung (12) an der ersten Verbindungsstelle (11) angeordnet ist, die zur Förderung von Rücklaufschlamm von dem ersten Beckenabschnitt (1) in das Einlaufmischbecken (3) betätigbar ist,
c3) eine erste Klarwasserabzugsstelle (13) im oberen Beckenbereich
des ersten Beckenabschnitts (1) angeordnet ist, und
d) wobei
d1) eine zweite Verbindungsstelle (21) zwischen dem Einlaufmischbecken (3) und dem zweiten Beckenabschnitt (2) im unteren Beckenbereich des zweiten Beckenabschnitts (2) angeordnet ist,
d2) eine zweite Fördereinrichtung (22) an der zweiten Verbindungsstelle (21) angeordnet ist, die zur Förderung von Rücklaufschlamm von dem zweiten Beckenabschnitt in das Einlaufmischbecken (3) betätigbar ist, und
d3) eine zweite Klarwasserabzugsstelle (23) im oberen Beckenbereich des zweiten Beckenabschnitts (2) angeordnet ist.

2. Abwasserreinigungsanlage nach Anspruch 1, **dadurch gekennzeichnet, dass** eine erste Beschickungsstelle (11) zur Zufuhr von zu reinigendem Abwasser von dem Einlaufmischbecken (3) in das kombinierte Reaktions- und Sedimentationsbecken (1, 2) zwischen dem Einlaufmischbecken (3) und dem ersten Beckenabschnitt (1) im unteren Beckenbereich des ersten Beckenabschnitts (1) angeordnet ist und eine zweite Beschickungsstelle (21) zur Zufuhr von zu reinigendem Abwasser von dem Einlaufmischbecken (3) in das kombinierte Reaktions- und Sedimentationsbecken (1, 2) zwischen dem Einlaufmischbecken (3) und dem zweiten Beckenabschnitt (2) im unteren Beckenbereich des zweiten Beckenabschnitts (2) angeordnet ist.

3. Abwasserreinigungsanlage nach Anspruch 2, **dadurch gekennzeichnet, dass** die erste Verbindungsstelle (11) zugleich die erste Beschickungsstelle und/oder die zweite Verbindungsstelle (21) zugleich die zweite Beschickungsstelle ist.

4. Abwasserreinigungsanlage nach wenigstens einem der vorhergehenden Ansprüche, **dadurch gekennzeichnet, dass** eine Steuerungseinrichtung (5) zur Steuerung der Betätigung der ersten und der zweiten Fördereinrichtung (12, 22) vorgesehen ist, die dazu eingerichtet ist, entweder die erste oder die zweite Fördereinrichtung (12, 22) oder, für einen im Vergleich zur Dauer der Sedimentationsphase kurzen Zeitraum, zeitlich überlappend beide Fördereinrichtungen (21, 22) zur Förderung von Rücklaufschlamm von dem Reaktions- und Sedimentationsbecken (1, 2) in das Einlaufmischbecken (3) zu betätigen.

5. Abwasserreinigungsanlage nach wenigstens einem der vorhergehenden Ansprüche, **dadurch gekennzeichnet, dass** das Reaktions- und Sedimentationsbecken (1, 2) einen Reaktionsabschnitt zur Reaktionsbehandlung des Beckeninhalts und einen Sedimentationsabschnitt zur zumindest zeitweise gleichzeitigen Sedimentation des Beckeninhalts aufweist.

6. Abwasserreinigungsanlage nach wenigstens einem der vorhergehenden Ansprüche, **dadurch gekennzeichnet, dass** das Reaktions- und Sedimentationsbecken (1, 2) über eine weitere Verbindungsstelle (17, 27) mit einem Schlammnachbehandlungsbecken (7) verbunden ist.

7. Abwasserreinigungsanlage nach wenigstens einem der vorhergehenden Ansprüche mit einem aerob, anoxisch oder anaerob betriebenen Schlammnachbehandlungsbecken (7) mit biologischer Aktivität mit einer im unteren Beckenbereich des Schlammnachbehandlungsbeckens angeordneten Schlammzuführungsstelle (71) und einer in einem weiter oben gelegenen Beckenbereich des Schlammnachbehandlungsbeckens angeordneten Schlammwasserablaufstelle (72) oder einem Schlammwasserüberlauf.

8. Abwasserreinigungsanlage nach Anspruch 7, **dadurch gekennzeichnet, dass** die Schlammwasserablaufstelle (72) mit einem Reaktions- und Sedimentationsbecken (1, 2) und/oder einem Einlaufmischbecken (3) verbunden ist.

9. Abwasserreinigungsanlage nach Anspruch 7 oder 8, **dadurch gekennzeichnet, dass** die Schlammwasserablaufstelle (72) auf der der Schlammzuführungsstelle (71) gegenüberliegenden Seite des Schlammnachbehandlungsbeckens (7) angeordnet ist.

10. Verfahren zur Abwasserreinigung, insbesondere Verfahren zum Betrieb einer Abwasserreinigungsanlage nach wenigstens einem der vorhergehenden Ansprüche, bei dem zu reinigendes Abwasser erst einem Einlaufmischbecken (3) und dann einem kombinierten Reaktions- und Sedimentationsbecken (1, 2) zugeführt wird, wobei in einer Betriebsphase der Abwasserreinigungsanlage zu reinigendes Abwasser dem Reaktions- und Sedimentationsbecken (1, 2) über eine erste im unteren Beckenbereich des Reaktions- und Sedimentationsbeckens (1, 2) angeordnete Beschickungsoder Verbindungsstelle (11) zugeführt wird und an einer zweiten im unteren Beckenbereich des Reaktions- und Sedimentationsbeckens angeordneten Verbindungsstelle (21) Rücklaufschlamm von dem Reaktions- und Sedimentationsbecken (1, 2) in das Einlaufmischbecken (3) geführt wird.

11. Verfahren nach Anspruch 10, **dadurch gekennzeichnet, dass** in einer anderen Betriebsphase der Abwasserreinigungsanlage das Reaktions- und Sedimentationsbecken (1, 2) in umgekehrter Fließrichtung betrieben wird, derart, dass zu reinigendes Abwasser dem Reaktions- und Sedimentationsbecken (1, 2) über die zweite Verbindungsstelle (21) oder eine zweite Beschickungsstelle zugeführt wird und an der ersten Verbindungsstelle (11) Rücklaufschlamm von dem Reaktions- und Sedimentationsbecken in das Einlaufmischbecken (3) geführt wird.

12. Verfahren nach Anspruch 10 oder 11, **dadurch gekennzeichnet, dass** die erste Verbindungsstelle (11) zugleich die erste Beschickungsstelle und/oder die zweite Verbindungsstelle (21) zugleich die zweite Beschickungsstelle ist.

13. Verfahren nach Anspruch 11 oder 12, **dadurch gekennzeichnet, dass** ein Abschnitt des Reaktions- und Sedimentationsbeckens (1, 2) als Reaktionsabschnitt zur Reaktionsbehandlung des Beckeninhalts und ein anderer ein Abschnitt des Reaktions- und Sedimentationsbeckens (1, 2) als Sedimentationsabschnitt zur zumindest zeitweise gleichzeitigen Sedimentation des Beckeninhalts betrieben wird, wobei der Reaktionsabschnitt und der Sedimentationsabschnitt je nach Betriebsphase der Abwasserreinigungsanlage wechseln.

14. Verfahren nach wenigstens einem der Ansprüche 10 bis 13, bei dem sedimentierter Schlamm einem aerob, anoxisch oder anaerob betriebenen
Schlammnachbehandlungsbecken (7) mit biologischer Aktivität zugeführt wird und durch Verdrängung infolge der Schlammzuführung höher gelegenes Schlammwasser aus dem Schlammnachbehandlungsbecken (7) abläuft.

## Claims

1. Wastewater-purification plant having
a) an intake mixing tank (3),
b) a combined reaction and sedimentation tank (1, 2), with a first and a second tank portion,
c) wherein
c1) a first connecting location (11), between the intake mixing tank (3) and the first tank portion (1), is arranged in the lower tank region of the first tank portion (1),
c2) a first delivery device (12) is arranged at the first connecting location (11), it being possible for this delivery device to be actuated in order to deliver return sludge from the first tank portion (1) into the intake mixing tank (3),
c3) a first clarified-water-drainage location (13) is arranged in the upper tank region of the first tank portion (1), and
d) wherein
d1) a second connecting location (21), between the intake mixing tank (3) and the second tank portion (2), is arranged in the lower tank region of the second tank portion (2),
d2) a second delivery device (22) is arranged at the second connecting location (21), it being possible for this delivery device to be actuated in order to deliver return sludge from the second tank portion into the intake mixing tank (3), and
d3) a second clarified-water-drainage location (23) is arranged in the upper tank region of the second tank portion (2).

2. Wastewater-purification plant according to Claim 1, **characterized in that** a first charging location (11), at which wastewater which is to be purified is fed from the intake mixing tank (3) into the combined reaction and sedimentation tank (1, 2), is arranged between the intake mixing tank (3) and the first tank portion (1), in the lower tank region of the first tank portion (1), and a second charging location (21), at which wastewater which is to be purified is fed from the intake mixing tank (3) into the combined reaction and sedimentation tank (1, 2), is arranged between the intake mixing tank (3) and the second tank portion (2), in the lower tank region of the second tank portion (2).

3. Wastewater-purification plant according to Claim 2, **characterized in that** the first connecting location (11) is, at the same time, the first charging location and/or the second connecting location (21) is, at the same time, the second charging location.

4. Wastewater-purification plant according to at least one of the preceding claims, **characterized in that** a control device (5) is provided in order to control the actuation of the first and of the second delivery devices (12, 22), this control device being set up in order to actuate either the first or the second delivery device (12, 22) or, for a short period of time in comparison with the duration of the sedimentation phase, both delivery devices (21, 22) at the same time, in order to deliver return sludge from the reaction and sedimentation tank (1, 2) into the intake mixing tank (3).

5. Wastewater-purification plant according to at least one of the preceding claims, **characterized in that** the reaction and sedimentation tank (1, 2) has a reaction portion, for the reaction treatment of the tank contents, and a sedimentation portion, for the at least temporarily simultaneous sedimentation of the tank contents.

6. Wastewater-purification plant according to at least one of the preceding claims, **characterized in that** the reaction and sedimentation tank (1, 2) is connected to a sludge-after-treatment tank (7) via a further connecting location (17, 27).

7. Wastewater-purification plant according to at least one of the preceding claims, having an aerobically, anoxically or anaerobically operated sludge-after-treatment tank (7) with biological activity having a sludge-feeding location (71), which is arranged in the lower tank region of the sludge-after-treatment tank, and having a slurry overflow or a slurry-runoff location (72), which is arranged in a higher tank region of the sludge-after-treatment tank.

8. Wastewater-purification plant according to Claim 7, **characterized in that** the slurry-runoff location (72) is connected to a reaction and sedimentation tank (1, 2) and/or to an intake mixing tank (3).

9. Wastewater-purification plant according to Claim 7 or 8, **characterized in that** the slurry-runoff location (72) is arranged on that side of the sludge-after-treatment tank (7) which is located opposite the sludge-feeding location (71).

10. Method for purifying wastewater, in particular a method for operating a wastewater-purification plant according to at least one of the preceding claims, in the case of which wastewater which is to be purified is fed first of all to an intake mixing tank (3) and then to a combined reaction and sedimentation tank (1, 2), wherein, in one operating phase of the wastewater-purification plant, wastewater which is to be purified is fed to the reaction and sedimentation tank (1, 2) via a first charging or connecting location (11), which is arranged in the lower tank region of the reaction and sedimentation tank (1, 2), and, at a second connecting location (21), which is arranged in the lower tank region of the reaction and sedimentation tank, return sludge is channeled from the reaction and sedimentation tank (1, 2) into the intake mixing tank (3).

11. Method according to Claim 10, **characterized in that**, in another operating phase of the wastewater-purification plant, the reaction and sedimentation tank (1, 2) is operated with an opposite flow direction such that wastewater which is to be purified is fed to the reaction and sedimentation tank (1, 2) via the second connecting location (21) or a second charging location and, at the first connecting location (11), return sludge is channeled from the reaction and sedimentation tank into the intake mixing tank (3).

12. Method according to Claim 10 or 11, **characterized in that** the first connecting location (11) is, at the same time, the first charging location and/or the second connecting location (21) is, at the same time, the second charging location.

13. Method according to Claim 11 or 12, **characterized in that** one portion of the reaction and sedimentation tank (1, 2) is operated as a reaction portion, for the reaction treatment of the tank contents, and another one portion of the reaction and sedimentation tank (1, 2) is operated as a sedimentation portion, for the at least temporarily simultaneous sedimentation of the tank contents, wherein the reaction portion and the sedimentation portion change over depending on the operating phase of the wastewater-purification plant.

14. Method according to at least one of Claims 10 to 13, in the case of which sedimented sludge is fed to an aerobically, anoxically or anaerobically operated sludge-after-treatment tank (7) with biological activity and, on account of displacement as a result of the sludge being fed, slurry located at a higher level runs off out of the sludge-after-treatment tank (7).

## Revendications

1. Installation de nettoyage des eaux usées, comprenant
a) un bassin de mélange d'entrée (3),
b) un bassin de réaction et de sédimentation combiné (1, 2) comprenant une première portion de bassin et une deuxième portion de bassin,
c) dans laquelle
c1) un premier point de connexion (11) entre
le bassin de mélange d'entrée (3) et la première portion de bassin (1) est disposé dans la région de bassin inférieure de la première portion de bassin (1),
c2) un premier dispositif de transport (12)
est disposé au niveau du premier point de connexion (11), lequel peut être actionné pour transporter les boues de recyclage depuis la première portion de bassin (1) dans le bassin de mélange d'entrée (3),
c3) un premier point de prélèvement d'eau
clarifiée (13) est disposé dans la région de bassin supérieure de la première portion de bassin (1), et
d) dans laquelle
d1) un deuxième point de connexion (21) est
disposé entre le bassin de mélange d'entrée (3) et la deuxième portion de bassin (2) dans la région de bassin inférieure de la deuxième portion de bassin (2),
d2) un deuxième dispositif de transport (22)
est disposé au niveau du deuxième point de connexion (21), lequel peut être actionné pour transporter les boues de recyclage depuis la deuxième portion de bassin dans le bassin de mélange d'entrée (3), et
d3) un deuxième point de prélèvement d'eau
clarifiée (23) est disposé dans la région de bassin supérieure de la deuxième portion de bassin (2).

2. Installation de nettoyage des eaux usées selon la revendication 1, **caractérisée en ce qu'**un premier point d'alimentation (11) pour l'alimentation d'eaux usées à nettoyer depuis le bassin de mélange d'entrée (3) dans le bassin de réaction et de sédimentation combiné (1, 2) est disposé entre le bassin de mélange d'entrée (3) et la première portion de bassin (1) dans la région de bassin inférieure de la première portion de bassin (1) et un deuxième point d'alimentation (21) pour l'alimentation d'eaux usées à nettoyer depuis le bassin de mélange d'entrée (3) dans le bassin de réaction et de sédimentation combiné (1, 2) est disposé entre le bassin de mélange d'entrée (3) et la deuxième portion de bassin (2) dans la région de bassin inférieure de la deuxième portion de bassin (2).

3. Installation de nettoyage des eaux usées selon la revendication 2, **caractérisée en ce que** le premier point de connexion (11) est en même temps le premier point d'alimentation et/ou le deuxième point de connexion (21) est en même temps le deuxième point d'alimentation.

4. Installation de nettoyage des eaux usées selon au moins l'une quelconque des revendications précédentes, **caractérisée en ce qu'**un dispositif de commande (5) est prévu pour commander l'actionnement des premier et deuxième dispositifs de transport (12, 22), lequel est prévu soit pour actionner le premier ou le deuxième dispositif de transport (12, 22), soit, pendant un intervalle de temps court par rapport à la durée de la phase de sédimentation, pour actionner de manière à se chevaucher dans le temps les deux dispositifs de transport (21, 22) pour transporter les boues de recyclage depuis le bassin de réaction et de sédimentation (1, 2) dans le bassin de mélange d'entrée (3).

5. Installation de nettoyage des eaux usées selon au moins l'une quelconque des revendications précédentes, **caractérisée en ce que** le bassin de réaction et de sédimentation (1, 2) présente une portion de réaction pour le traitement par réaction du contenu du bassin et une portion de sédimentation pour la sédimentation du contenu du bassin de manière au moins simultanée dans le temps.

6. Installation de nettoyage des eaux usées selon au moins l'une quelconque des revendications précédentes, **caractérisée en ce que** le bassin de réaction et de sédimentation (1, 2) est connecté à un bassin de post-traitement des boues (7) par le biais d'un point de connexion supplémentaire (17, 27).

7. Installation de nettoyage des eaux usées selon au moins l'une quelconque des revendications précédentes, comprenant un bassin de post-traitement des boues (7) fonctionnant par voie aérobie, anoxique ou anaérobie, avec une activité biologique, avec un point d'alimentation de boues (71) disposé dans la région de bassin inférieure du bassin de post-traitement des boues et un point de sortie des eaux boueuses (72) ou un débordement des eaux boueuses disposé dans une région de bassin du bassin de post-traitement des boues située plus haut.

8. Installation de nettoyage des eaux usées selon la revendication 7, **caractérisée en ce que** le point de sortie des eaux boueuses (72) est connecté à un bassin de réaction et de sédimentation (1, 2) et/ou à un bassin de mélange d'entrée (3).

9. Installation de nettoyage des eaux usées selon la revendication 7 ou 8, **caractérisée en ce que** le point de sortie des eaux boueuses (72) est disposé du côté du bassin de post-traitement des boues (7) opposé au point d'alimentation de boues (71).

10. Procédé de nettoyage des eaux usées, en particulier procédé pour faire fonctionner une installation de nettoyage des eaux usées selon au moins l'une quelconque des revendications précédentes, dans lequel les eaux usées à nettoyer sont d'abord acheminées à un bassin de mélange d'entrée (3) puis à un bassin de réaction et de sédimentation combiné (1, 2), les eaux usées à nettoyer dans une phase de fonctionnement de l'installation de nettoyage des eaux usées étant acheminées au bassin de réaction et de sédimentation (1, 2) par le biais d'un premier point d'alimentation ou point de connexion (11) disposé dans la région de bassin inférieure du bassin de réaction et de sédimentation (1, 2) et des boues de recyclage étant guidées depuis le bassin de réaction et de sédimentation (1, 2) dans le bassin de mélange d'entrée (3) au niveau du deuxième point de connexion (21) disposé dans la région de bassin inférieure du bassin de réaction et de sédimentation.

11. Procédé selon la revendication 10, **caractérisé en ce que** dans une autre phase de fonctionnement de l'installation de nettoyage des eaux usées, le bassin de réaction et de sédimentation (1, 2) fonctionne dans le sens d'écoulement inverse, de telle sorte que les eaux usées à nettoyer soient acheminées au bassin de réaction et de sédimentation (1, 2) par le biais du deuxième point de connexion (21) ou d'un deuxième point d'alimentation et que les boues de recyclage soient guidées au niveau du premier point de connexion (11) depuis le bassin de réaction et de sédimentation dans le bassin de mélange d'entrée (3).

12. Procédé selon la revendication 10 ou 11, **caractérisé en ce que** le premier point de connexion (11) est en même temps le premier point d'alimentation et/ou le deuxième point de connexion (21) est en même temps le deuxième point d'alimentation.

13. Procédé selon la revendication 11 ou 12, **caractérisé en ce qu'**une portion du bassin de réaction et de sédimentation (1, 2) fonctionne en tant que portion de réaction pour le traitement par réaction du contenu du bassin et une autre portion du bassin de réaction et de sédimentation (1, 2) fonctionne en tant que portion de sédimentation pour la sédimentation du contenu du bassin de manière au moins simultanée dans le temps, la portion de réaction et la portion de sédimentation alternant en fonction de la phase de fonctionnement de l'installation de nettoyage des eaux usées.

14. Procédé selon au moins l'une quelconque des revendications 10 à 13, dans lequel les boues sédimentées sont acheminées à un bassin de post-traitement des boues (7) fonctionnant par voie aérobie, anoxique ou anaérobie, avec une activité biologique, et s'écoulent par refoulement des eaux boueuses placées plus haut, du fait de l'alimentation des boues, hors du bassin de post-traitement des boues (7).
